(19) Europäisches Patentamt
European Patent Office
Office européen des brevets

(11) **EP 2 492 734 B1**

(12) **FASCICULE DE BREVET EUROPEEN**

(45) Date de publication et mention
de la délivrance du brevet:
**25.12.2019 Bulletin 2019/52**

(51) Int Cl.:
***G02B 17/06*** *(2006.01)*

(21) Numéro de dépôt: **12155786.2**

(22) Date de dépôt: **16.02.2012**

(54) **Télescope grand angulaire à cinq miroirs**

Großes Winkelteleskop mit fünf Spiegeln

Wide-angle telescope with five mirrors

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.02.2011 FR 1100550**

(43) Date de publication de la demande:
**29.08.2012 Bulletin 2012/35**

(73) Titulaire: **THALES**
**92400 Courbevoie (FR)**

(72) Inventeur: **Martin, Philippe**
**06250 Mougins (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**EP-A1- 0 660 155     US-A- 3 560 643**
**US-A- 4 226 501     US-A1- 2003 179 444**

- **DAVID SHAFER: "SOME ODD AND INTERESTING MONOCENTRIC DESIGNS", PROCEEDINGS OF SPIE, SPIE, US, vol. 5865, 1 August 2005 (2005-08-01), pages 586508-01, XP002608930, ISSN: 0277-786x, DOI: 10.1117/12.624556 [retrieved on 2005-08-18]**

**Description**

Le domaine de l'invention est celui des télescopes et plus particulièrement des télescopes d'observations embarqués dans des satellites. Plus précisément, le domaine de l'invention concerne les systèmes catoptriques grand angulaire, permettant l'observation terrestre ou spatiale dans une large bande spectrale.

Généralement, ces télescopes ont un grand champ angulaire dans une première direction et un champ angulaire de moindre importance dans la direction perpendiculaire. Cette disposition permet de réaliser des architectures optiques comportant uniquement des miroirs hors d'axe sans occultation centrale. Ce type d'architecture permet de réaliser des télescopes compacts, ayant une très bonne transmission et dénués d'aberrations chromatiques. Cependant, ces architectures optiques sont souvent complexes dans la mesure où la qualité d'image doit être excellente dans un grand champ.

Actuellement, un premier type d'architecture optique de télescopes anastigmats comprend trois miroirs. Ces télescopes sont encore appelés « télescopes TMA » selon la terminologie anglo-saxonne signifiant « Three Mirrors Anastigmat ». Les télescopes TMA offrent des champs généralement compris entre 25° et 30° d'angle tout en corrigeant les aberrations géométriques dites du troisième ordre. Mais au-delà de ce champ, les dégradations de l'image deviennent importantes. Ainsi, le brevet de la société Hugues Aircraft US 5 379 157 décrit une combinaison de ce type. Cette limitation de champ n'est pas adaptée à l'évolution des missions d'observation de la terre qui nécessitent, de plus en plus, de larges champs linéaires afin d'augmenter le champ instantané couvert par l'instrument en rotation autour de la terre. L'intérêt de ces missions est de photographier à intervalles réguliers un large champ. Dans ce contexte, les télescopes de type TMA ne sont plus suffisants pour répondre aux missions nécessitant de photographier de grands champs.

Une solution permettant d'augmenter le champ est l'utilisation d'un second type d'architecture de télescopes anastigmats comprenant quatre miroirs, appelés également dans la terminologie technique « FMA » pour « Four Mirrors Anastigmat ». La demande EP 0 601 871 de la société Hugues Aircraft décrit une telle combinaison. Le brevet de la société Sagem FR 2 764 081 détaille un télescope comprenant quatre miroirs dont le champ possède une largeur maximale de 70° d'angle. Enfin, la demande EP 2 073 049 de la société Thales et du même inventeur décrit également une architecture optique à quatre miroirs où le grand champ est porté à 85°.

Cependant, les télescopes « TMA » ou « FMA » classiques ont un miroir primaire convexe et une pupille d'entrée virtuelle. Cette absence de pupille réelle présente plusieurs inconvénients. En l'absence de pupille d'entrée réelle, il est impossible ou très difficile d'accommoder un diffuseur, une fenêtre dépolarisante ou un capot amovible en entrée d'instrument et ainsi de le calibrer ou de le protéger très efficacement. Une pupille d'entrée réelle facilite l'interface entre le télescope et d'autres instruments.

La publication DAVID SHAFER: "SOME ODD AND INTERESTING MONOCENTRIC DESIGNS",PROCEEDINGS OF SPIE, SPIE, US, vol. 5865, 1 août 2005 décrit un télescope à cinq miroir comportant une pupille réelle au centre de courbure du miroir primaire.

Aussi, un des buts de l'invention est de remédier à ces inconvénients en réalisant une architecture optique à pupille d'entrée réelle. Ce nouveau type d'architecture présente, de plus, l'avantage de dépasser les limitations actuelles de largeur de champs pour les télescopes d'observations.

Plus précisément, l'invention a pour objet un télescope catoptrique grand angulaire, selon la revendication 1:

- le télescope comporte cinq miroirs hors d'axe successifs notés respectivement et dans l'ordre de la succession premier, deuxième, troisième, quatrième et cinquième miroir ;
- le premier miroir ou miroir d'entrée desdits cinq miroirs est concave ;
- la pupille d'entrée du télescope est réelle et située en avant de cedit premier miroir.

Avantageusement, le premier miroir est sphérique.

Avantageusement, la pupille de sortie, c'est-à-dire l'image de la pupille d'entrée à travers les cinq miroirs, est à l'infini, le télescope étant ainsi télécentrique.

Avantageusement, le deuxième miroir est convexe et asphérique.

Le troisième miroir est concave, le quatrième miroir est convexe et le cinquième miroir est concave.

Avantageusement, au moins le troisième ou le quatrième ou le cinquième miroir est conique.

Si $R_1$ est le rayon de courbure au sommet du premier miroir, le rayon de courbure au sommet du deuxième miroir $R_2$ vaut sensiblement $0,5.R_1$, le rayon de courbure au sommet du troisième miroir $R_3$ vaut sensiblement $1,2.R_1$, le rayon de courbure au sommet du quatrième miroir $R_4$ vaut sensiblement $0,8.R_1$, le rayon de courbure au sommet du cinquième miroir $R_5$ vaut sensiblement $0,9.R_1$, la focale du télescope valant $0.25.R_1$.

Le champ objet du télescope est sensiblement rectangulaire, la largeur du rectangle étant au moins de 1 degré et sa longueur au moins de 100 degrés.

Enfin, le champ image est sensiblement plan.

L'invention sera mieux comprise et d'autres avantages apparaîtront à la lecture de la description qui va suivre donnée à titre non limitatif et grâce aux figures annexées parmi lesquelles :

La figure 1 représente un exemple d'architecture optique d'un télescope selon l'invention dans le plan de symétrie du télescope ;

La figure 2 représente l'architecture optique de la figure 1 dans un plan perpendiculaire au plan de symétrie, trois rayons lumineux du champ central étant représentés ;

La figure 3 représente l'architecture optique de la figure 1 dans un plan perpendiculaire au plan de symétrie, trois rayons lumineux du champ extrême étant représentés ;

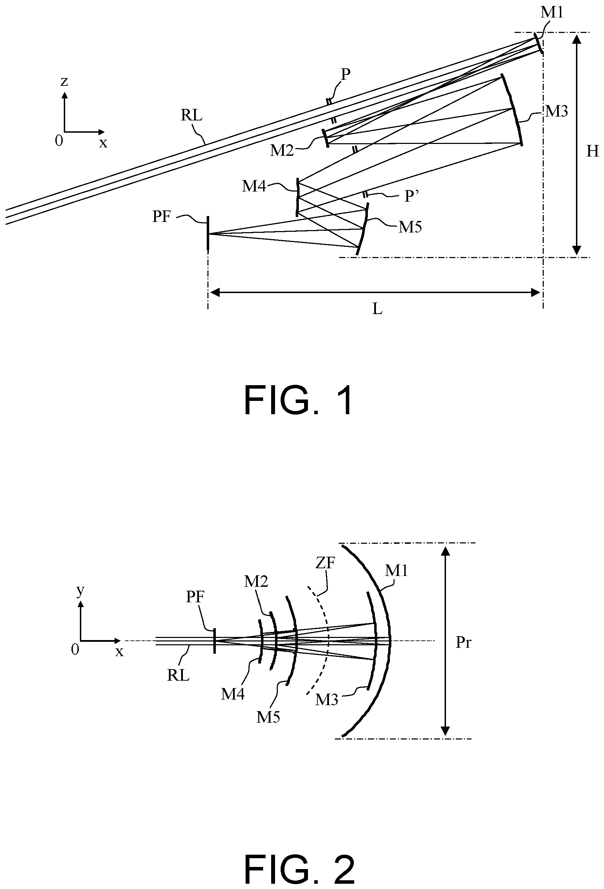

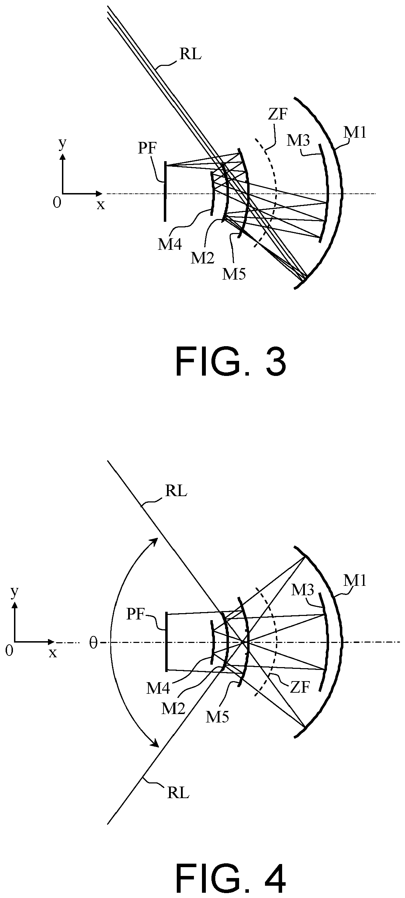

Enfin, la figure 4 représente l'architecture optique de la figure 1 dans un plan perpendiculaire au plan de symétrie, deux rayons lumineux symétriques des champs extrêmes étant représentés ;

La particularité des télescopes selon l'invention est de travailler avec des champs objets très importants dans une direction et faibles dans la direction perpendiculaire. Cette disposition particulière permet de construire des architectures optiques ne comportant que des miroirs sans occultations centrales, les miroirs ayant un hors d'axe suffisant pour réfléchir les rayons lumineux d'un miroir vers le miroir suivant sans en occulter.

Alors que les architectures optiques de l'art antérieur possèdent trois ou quatre miroirs, le télescope selon l'invention est une combinaison à cinq miroirs, le premier miroir étant concave. L'ajout de ce cinquième miroir présente de nombreux avantages sur les solutions précédentes. Cette disposition permet d'obtenir :

- Un très grand champ, de l'ordre de 100 degrés ;
- Une très bonne qualité image, limitée par la diffraction sur tout le champ ;
- une faible distorsion le long du champ, ne dépassant pas +/-1.25 degré, alors que les meilleures solutions de type « TMA » et « FMA » ont une distorsion deux fois plus importante ;
- une pupille d'entrée réelle ;
- une architecture de type télécentrique en sortie, idéale pour accommoder une fente d'entrée d'un spectromètre ;
- un champ image plan.

A titre d'exemple, les figures 1 à 4 représentent une architecture optique de télescope selon l'invention dans deux plans de coupe différents, le premier (O, x, z) se situe dans le plan de symétrie du télescope, le second (O, x, y) se situe dans un plan perpendiculaire. L'architecture optique comprend cinq miroirs notés M1, M2, M3, M4 et M5. Sur ces différentes figures, les miroirs sont représentés en traits gras. Le plan focal PF est également représenté en traits gras. Les rayons lumineux RL sont représentés en traits fins, les pupilles P et P' en traits doubles et la zone de focalisation intermédiaire ZF en traits pointillés.

Le premier miroir M1 est un miroir concave sphérique. La pupille d'entrée P du télescope est située au voisinage du centre de courbure de ce premier miroir M1. Ce miroir donne du champ objet à l'infini une image réelle intermédiaire courbe située dans la zone de focalisation intermédiaire ZF située entre le premier miroir M1 et le second miroir M2.

L'ensemble des quatre miroirs M2, M3, M4 et M5 donne de cette image réelle intermédiaire une image réelle dépourvue d'aberrations géométriques dans le plan focal PF.

Les miroirs M2 et M3 forment de l'image de la pupille P une image intermédiaire P' située entre le miroir M2 et le miroir M3. L'image de cette pupille P' est collimatée à l'infini par les miroirs M4 et M5. Ainsi, la combinaison optique est télécentrique, ce qui signifie que, quelque soit le champ objet, les rayons lumineux passant par le centre de la pupille d'entrée sont tous parallèles entre eux au voisinage du plan de focalisation. Cette disposition facilite grandement l'adaptation d'instruments de mesure comme des spectroscopes disposés dans le plan focal PF. De plus, le champ image est plan, ce qui facilite encore la mise en place de la surface photosensible d'un détecteur ou la fente d'entrée d'un spectromètre.

Sur les figures 1 et 2, trois rayons RL représentent le parcours des rayons lumineux issus du champ central à travers le télescope, le rayon central passe par le centre de la pupille P, les deux autres rayons passent par les bords de la pupille.

Avant le télescope, ces trois rayons sont parallèles entre eux. Ils se focalisent une première fois au niveau de la zone de focalisation intermédiaire ZF puis une seconde fois au niveau du plan focal PF. Le hors d'axe des miroirs est calculé de façon à ne pas provoquer de vignettage de ces rayons.

Sur la figure 3, trois rayons RL représentent le parcours des rayons lumineux issus d'un champ extrême à travers le télescope, le rayon central passe par le centre de la pupille P, les deux autres rayons passent par les bords de la pupille.

Avant le télescope, ces trois rayons sont parallèles entre eux. Ils se focalisent une première fois au niveau de la zone de focalisation intermédiaire ZF puis une seconde fois au niveau du plan focal PF. Le rayon central est perpendiculaire au plan de focalisation.

La figure 4 représente les deux rayons issus des deux extrémités du champ.

3

Les miroirs M2 et M4 sont convexes et les miroirs M3 et M5 sont concaves. Les quatre miroirs M2, M3, M4 et M5 sont asphériques ou coniques. Plus précisément, la déformée Z de la surface représentative de ces miroirs en fonction de la distance h du sommet à un point P de la surface vérifie :

$$Z = \frac{\dfrac{h^2}{R}}{1 + \sqrt{1 - (1+k).\dfrac{h^2}{R^2}}} + Ah^4 + Bh^6 + Ch^8 + Dh^{10}$$

avec :

R : rayon de courbure au sommet de la surface ;
k : constante de conicité de la surface ;
A : Constante de déformée d'ordre 4 ;
B : Constante de déformée d'ordre 6 ;
C : Constante de déformée d'ordre 8 ;
D : Constante de déformée d'ordre 10.

Plus précisément, le miroir M2 est convexe asphérique d'ordre 6, le miroir M3 est concave conique, le miroir M4 est convexe conique et le miroir M5 est concave conique.

Les tableaux ci-dessous donnent les principales caractéristiques géométriques d'une architecture optique selon l'invention. Le tableau I donne les paramètres géométriques des miroirs et le tableau II les principales distances séparant ces miroirs.

TABLEAU I

|  | Forme | Rayon de courbure | k | A | B |
|---|---|---|---|---|---|
|  |  | mm |  | mm$^{-3}$ | mm$^{-5}$ |
| M1 | Concave Sphérique | 26.2 | - | - | - |
| M2 | Convexe asphérique | 15.5 | 0.85 | 0 | - 0.18x1 0$^{-7}$ |
| M3 | concave conique | 32.16 | 0.08 | - | - |
| M4 | convexe conique | 21.8 | 2.09 | - | - |
| M5 | concave conique | 23.8 | 0.51 | - | - |

TABLEAU II

| Distance | mm |
|---|---|
| M1-M2 | 24.5 |
| M2-M3 | 20.1 |
| M3-M4 | 24.7 |
| M4-M5 | 7.7 |
| M5-Plan focal | 18.2 |

Dans ces conditions, la pupille d'entrée est située à 21 mm en avant du miroir M1, la pupille de sortie est à l'infini, la focale résultante du télescope vaut 6.8 mm. Le champ objet $\theta$ dans le plan (O, x, y) est de l'ordre de 100 degrés et dans le plan (O, x, z) de l'ordre du degré.

L'encombrement général de cette combinaison optique est le suivant :

Longueur L :     67 mm
Hauteur H :      25 mm

(suite)

Profondeur Pr :    44 mm

La qualité de l'image dans tout le champ est limitée par la diffraction.

## Revendications

**1.**   Télescope catoptrique grand angulaire comportant cinq miroirs hors d'axe successifs notés respectivement et dans l'ordre de la succession, premier miroir (M1), deuxième miroir (M2), troisième miroir (M3), quatrième miroir (M4) et cinquième miroir (M5); dans lequel:

- le premier miroir ou miroir d'entrée (M1) desdits cinq miroirs est concave ; le deuxième miroir (M2) est convexe, le troisième miroir (M3) est concave, le quatrième miroir (M4) est convexe, le cinquième miroir (M5) est concave ;
- le champ image est sensiblement plan;

**caractérisé en ce que** :

- le champ objet angulaire du télescope est rectangulaire, la largeur du rectangle étant de l'ordre de 1 degré et sa longueur au moins 100 degrés;

- la pupille d'entrée (P) du télescope est réelle et située en avant de cedit premier miroir (M1) la distance séparant la pupille d'entrée du premier miroir est substantiellement égale au rayon de courbure dudit premier miroir et la distance séparant le second miroir du premier miroir est substantiellement égale à ce rayon de courbure du premier miroir ;
- si R1 est le rayon de courbure au sommet du premier miroir (M1), le rayon de courbure R2 au sommet du deuxième miroir (M2) vaut sensiblement 0,5.R1, le rayon de courbure au sommet du troisième miroir (M3) vaut sensiblement 1,2.R1, le rayon de courbure R4 au sommet du quatrième miroir (M4) vaut sensiblement 0,8.R1, le rayon de courbure R5 au sommet du cinquième miroir (M5) vaut sensiblement 0,9.R1, la focale du télescope valant 0.25.R1.

**2.**   Télescope catoptrique selon la revendication 1, **caractérisé en ce que** le premier miroir (M1) est sphérique.

**3.**   Télescope catoptrique selon la revendication 1, **caractérisé en ce que** la pupille de sortie, c'est-à-dire l'image de la pupille d'entrée à travers les cinq miroirs, est à l'infini, le télescope étant ainsi télécentrique.

**4.**   Télescope catoptrique selon la revendication 1, **caractérisé en ce que** le deuxième miroir (M2) est asphérique.

**5.**   Télescope catoptrique selon la revendication 1, **caractérisé en ce qu'**au moins le troisième ou le quatrième ou le cinquième miroir est conique.

## Patentansprüche

**1.**   Katoptrisches Weitwinkelteleskop, das fünf aufeinander folgende außeraxiale Spiegel umfasst, jeweils und in der Reihenfolge ihrer Aufeinanderfolge als erster Spiegel (M1), zweiter Spiegel (M2), dritter Spiegel (M3), vierter Spiegel (M4) und fünfter Spiegel (M5) bezeichnet; wobei:

- der erste Spiegel oder Eintrittsspiegel (M1) der fünf Spiegel konkav ist; der zweite Spiegel (M2) konvex ist, der dritte Spiegel (M3) konkav ist, der vierte Spiegel (M4) konvex ist, der fünfte Spiegel (M5) konkav ist;
- das Bildfeld im Wesentlichen flach ist;

**dadurch gekennzeichnet, dass**:

- das Winkelobjektfeld des Teleskops rechteckig ist, wobei die Größe des Rechtecks in der Größenordnung von 1 Grad liegt und seine Länge mindestens 100 Grad beträgt;
- die Eintrittspupille (P) des Teleskops real ist und sich vor dem ersten Spiegel (M1) befindet, wobei die Distanz, die die Eintrittspupille vom ersten Spiegel trennt, im Wesentlichen gleich dem Krümmungsradius des ersten Spiegels ist, und die Distanz, die den zweiten Spiegel vom ersten Spiegel trennt, im Wesentlichen gleich diesem Krümmungsradius des ersten Spiegels ist;
- wenn R1 der Krümmungsradius an der Spitze des ersten Spiegels ist (M1), dann beträgt der Krümmungsradius R2 an der Spitze des zweiten Spiegels (M2) im Wesentlichen 0,5.R1, der Krümmungsradius an der Spitze des dritten Spiegels (M3) beträgt im Wesentlichen 1,2.R1, der Krümmungsradius R4 an der Spitze des vierten Spiegels (M4) beträgt im Wesentlichen 0,8.R1, der Krümmungsradius R5 an der Spitze des fünften Spiegels (M5) beträgt im Wesentlichen 0,9.R1, wobei der Brennpunkt des Teleskops 0,25.R1 beträgt.

2.  Katoptrisches Teleskop nach Anspruch 1, **dadurch gekennzeichnet, dass** der erste Spiegel (M1) sphärisch ist.

3.  Katoptrisches Teleskop nach Anspruch 1, **dadurch gekennzeichnet, dass** die Austrittspupille, das heißt das Bild der Eintrittspupille durch die fünf Spiegel, unendlich ist, wobei das Teleskop somit telezentrisch ist.

4.  Katoptrisches Teleskop nach Anspruch 1, **dadurch gekennzeichnet, dass** der zweite Spiegel (M2) asphärisch ist.

5.  Katoptrisches Teleskop nach Anspruch 1, **dadurch gekennzeichnet, dass** mindestens der dritte oder der vierte oder der fünfte Spiegel konisch ist.

**Claims**

1.  Wide angle catoptric telescope comprising five successive mirrors out of axis noted respectively and in the order of succession, first mirror (M1), second mirror (M2), third mirror (M3), fourth mirror (M4) and fifth mirror (M5); in which:

    - the first mirror or entry mirror (M1) of said five mirrors is concave; the second mirror (M2) is convex, the third mirror (M3) is concave, the fourth mirror (M4) is convex, the fifth mirror (M5) is concave;
    - the image field is substantially plane;

    **characterized in that**:

    - the angular object field of the telescope is rectangular, the width of the rectangle being of the order of 1 degree and its length at least 100 degrees;
    - the entrance pupil (P) of the telescope is real and situated in front of said first mirror (M1), the distance separating the entrance pupil from the first mirror is substantially equal to the radius of curvature of said first mirror and the distance separating the second mirror from the first mirror is substantially equal to this radius of curvature of the first mirror;
    - if R1 is the radius of curvature at the top of the first mirror (M1), the radius of curvature R2 at the top of the second mirror (M2) is substantially 0.5.R1, the radius of curvature at the apex of the third mirror (M3) is substantially 1.2.R1, the radius of curvature R4 at the apex of the fourth mirror (M4) is substantially 0.8.R1, the radius of curvature R5 at the apex of the fifth mirror (M5) is substantially 0.9.R1, the focal length of the telescope is 0.25.R1.

2.  Catoptric telescope according to claim 1, **characterized in that** the first mirror (M1) is spherical.

3.  A catoptric telescope according to claim 1, **characterized in that** the exit pupil, that is to say the image of the entrance pupil through the five mirrors, is at infinity, the telescope thus being telecentric.

4.  Catoptric telescope according to claim 1, **characterized in that** the second mirror (M2) is aspheric.

5.  A catoptric telescope according to claim 1, **characterized in that** at least the third or the fourth or the fifth mirror is conical.

# FIG. 1

# FIG. 2

# FIG. 3

# FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5379157 A
- EP 0601871 A
- FR 2764081
- EP 2073049 A

**Littérature non-brevet citée dans la description**

- SOME ODD AND INTERESTING MONOCENTRIC DESIGNS. **DAVID SHAFER.** PROCEEDINGS OF SPIE. SPIE, 01 Août 2005, vol. 5865